# EUROPÄISCHE PATENTSCHRIFT

(11) **EP 0 730 803 B1**
(45) Veröffentlichungstag und Bekanntmachung des Hinweises auf die Patenterteilung: **03.03.1999**
(21) Anmeldenummer: 95901316.0
(22) Anmeldetag: 09.11.1994
(51) Int. Cl.: H04L 12/403, B60R 16/02

(54) **VORRICHTUNG ZUM AUSTAUSCHEN VON DATEN**
DEVICE FOR EXCHANGING DATA
DISPOSITIF POUR L'ECHANGE DE DONNEES

(30) Priorität: 24.11.1993 DE 4340048
(43) Veröffentlichungstag der Anmeldung: 11.09.1996
(73) Patentinhaber: ROBERT BOSCH GMBH, 70442 Stuttgart (DE)
(72) Erfinder: KREMSER, Rolf, D-77743 Neuried (DE); DIEBOLD, Bernd, D-77866 Rheinau (DE)
(86) Internationale Anmeldenummer: DE9401323
(87) Internationale Veröffentlichungsnummer: WO9515043

(56) Entgegenhaltungen:
- EP-A- 0 266 704
- EP-A- 0 396 090
- WO-A-93/20490
- IEEE TRANSACTIONS ON INDUSTRIAL ELECTRONICS AND CONTROL INSTRUMENTATION, Bd.IECE-26, Nr.3, August 1979, NEW YORK US Seiten 151 - 155 C.J.TAVORA 'The Remote Link Unit - An Advanced Remote Terminal Concept'

## Beschreibung

### Stand der Technik

Die Erfindung geht aus von einer Vorrichtung zum Austauschen von Daten nach der Gattung des unabhängigen Anspruchs. Aus der EP-A 0 396 090 ist eine gattungsgemäße Vorrichtung zum Austauschen von Daten zwischen einer Hauptstation, die als Master bezeichnet ist, und wenigstens einer Nebenstation, die als Slave bezeichnet ist, bekannt. Sowohl der Master als auch die Slaves verfügen über Schnittstellen, die jeweils auf wenigstens eine gemeinsame Datenleitung zugreifen. Der Master kann sämtliche Slaves ansprechen. Eine gegebenenfalls erforderliche Datenübertragung von einem Slave zum Master kann der Slave selbst starten, ohne vom Master aufgefordert zu sein. Die wesentliche Signalverarbeitung ist im Master angesiedelt, während die Slaves beispielsweise die von Sensoren abgegebenen, den Slaves zugeführten Signale für die Datenübertragung zum Master aufbereiten und gegebenenfalls die vom Master abgegebener Signale zum Betitigen von Stellgliedern weiterleiten. Diese Maßnahmen tragen dazu bei, den schaltungstechnischen Aufwand in den Slaves möglischt gering zu halten, um eine kostengüngstige Herstellung zu ermöglichen. Die bekannte Vorrichtung ist im Rahmen eines Multiplexsystems vorgesehen, das in einem Kraftfahrzeug angeordnet ist. Die Slaves sind beispielsweise Stellantrieben von Komfortbetätigungun, Steuergeräten und anderen elektrischen Kraftfahrzeugskomponenten zugeordnet, die von wenigstens einem Master von zentraler Stelle aus gesteuert sind. Die einzelnen Slaves sind unterschiedlich ausgebildet, um die von ihnen vorzunehmenden Signalerfassungs- und Signalabgabefunktionen erfüllen zu können.

Aus der WO 93/20 490 ist ein Multiplexsystem bekannt, bei dem eine Variantencodierung vorgesehen ist. Das Multiplexsystem enthält einen Master sowie mehrere Slaves, die über ein Bussystem verbunden sind. Die einzelnen Slaves sind spezielle Steuergeräte, die in einem Kraftfahrzeug für bestimmte Aufgaben vorgesehen sind. Beispiele solcher Steuergeräte sind ein Motorsteuergerät, ein Getriebesteuergerät sowie ein Klimasteuergerät. Diese Funktionen sind den Slaves fest zugeordnet. Variabel dagegen ist das spezielle Betriebsprogramm der einzelnen Slaves. Um die Fertigungskosten und insbesondere die Vorratshaltungskosten niedrig zu halten, enthalten die als Slaves ausgebildeten speziellen Steuergeräte eine Anzahl von unterschiedlichen Betriebsprogrammen, wobei der Master eines der zum Einsatz gelangenden Betriebsprogramme auswählt.

Der Erfindung liegt die Aufgabe zugrunde, eine Vorrichtung zum Austauschen von Daten anzugeben, die kostengünstig realisierbar ist. Die Aufgabe wird durch die im unabhängigen Anspruch angegebenen Merkmale gelöst.

### Vorteile der Erfindung

Die erfindungsgemäße Vorrichtung zum Austausch von Daten weist den Vorteil auf, daß sämtliche Nebenstationen, im folgenden als Slaves bezeichnet, zumindest in einer Grundkonfiguration, identisch aufgebaut sind. Die einzelnen Slaves unterscheiden sich nur durch eine individuelle, einmalige Kennung, die beispielsweise während der Fertigung als fortlaufende Seriennummer im Slave hinterlegt wird. Die von den Slaves auszuführenden Funktionen werden den Slaves erst nach der Inbetriebnahme der Vorrichtung zugewiesen. Die Funktion des Slaves ist von Programmen festgelegt, die in einem im Slave angeordneten Speicher für anwendungsspezifische Programme hinterlegt werden. Die Hauptstation, im folgenden als Master bezeichnet, enthält einen Kennungsspeicher zur Aufnahme der in den Slaves gespeicherten Kennungen, um die Slaves identifizieren zu können.

Eine bevorzugte Verwendung der erfindungsgemäßen Vorrichtung ist im Rahmen eines Multiplexsystems gegeben, das beispielsweise in einem Kraftfahrzeug angeordnet ist. Ein wesentlicher Vorteil ist die kostengünstige Realisierung der erfindungsgemäßen Vorrichtung, die durch die erhöhte Stückzahl bei der Fertigung von identischen Slaves erzielt wird. Ein weiterer Vorteil ergibt sich bei der Lagerhaltung, die im einfachsten Fall auf einheitlich ausgebildete Master und auf die identischen Slaves abgestellt ist.

Vorteilhafte Weiterbildungen und Ausgestaltungen der erfindungsgemäßen Vorrichtung ergeben sich aus abhängigen Vorrichtungsansprüchen.

Besonders vorteilhaft ist die Maßnahme, den Master mit einem Speicher zur Aufnahme der in den Slaves zu hinterlegenden anwendungsspezifischen Programme auszustatten. Bei einem gegebenenfalls erforderlichen Austausch eines Slaves im Rahmen einer Reparatur kann auf das im Master enthaltene anwendungsspezifische Programm jederzeit zurückgegriffen und in den neuen Slave geladen werden.

Besonders vorteilhaft ist es, den einzelnen Slaves jeweils Anwendungsschnittstellen zuzuordnen, deren Funktion in Abhängigkeit von den in dem betreffenden Slave zu hinterlegenden anwendungsspezifischen Programmen festgelegt ist. Mit dieser Maßnahme ist eine Anpassung der Zahl der Eingänge sowie der Ausgänge an den jeweiligen Bedarf möglich.

Eine vorteilhafte Ausgestaltung sieht vor, daß die in den einzelnen Slaves unveränderbar hinterlegte Kennung, die beispielsweise in einem Festwertspeicher enthalten ist, eine in der Produktion vergebene laufende Seriennummer ist. Diese Maßnahme stellt sicher, daß bei einem gegebenenfalls erforderlichen Austausch eines Slaves bei einer Reparatur sichergestellt ist, daß die Slaves stets unterschiedliche Kennungen aufweisen.

Eine vorteilhafte Weiterbildung sieht vor, daß der Master eine Schnittstelle enthält, die es ermöglicht, die in den einzelnen Slaves zu hinterlegenden anwendungsspezifischen Programme von einem externen Rechner aus über den Master in die Slaves und in den gegebenenfalls im Master vorhandenen Speicher zu laden. Insbesondere ist es mit dieser Schnittstelle möglich, die Kennungen der einzelnen Slaves in den Master zu übertragen.

Die Schnittstelle ist beispielsweise eine Diagnoseschnittstelle gemäß DIN/ISO 9141. Die Ausbildung der Schnittstelle als genormte Diagnoseschnittstelle ermöglicht eine Eigendiagnose in der bekannten Vorrichtung. Der für die Diagnosedaten erforderliche Speicher braucht lediglich im Master vorhanden sein. Die in den einzelnen Slaves ermittelten Diagnosedaten werden über die gemeinsame Datenleitung zum Master übertragen und dort entweder unmittelbar im Diagnosespeicher abgelegt oder zunächst im Rahmen von Diagnoseprogrammen weiterverarbeitet. Das gesamte System aus Master und Slaves enthält somit lediglich eine Diagnoseschnittstelle.

Die erfindungsgemäßen Verfahren ermöglichen jeweils ein vorteilhaftes Betreiben der erfindungsgemäßen Vorrichtung.

Vorteilhafterweise ist vorgesehen, daß die Kennungen der Slaves über die im Master angeordnete Diagnoseschnittstelle dem Master mitgeteilt werden. Die Identifizierung ist mit dieser Maßnahme unmittelbar gegeben. Der externe Rechner stellt weiterhin die für die Slaves bestimmten anwendungsspezifischen Programme bereit.

Vorteilhafterweise ist vorgesehen, daß sich der Master die in den einzelnen Slaves hinterlegten Kennungen selbst beschafft durch Auslesen der in den Slaves hinterlegten Kennungen. Bei diesem Verfahren ist vorauszusetzen, daß die Slaves bei der Installation der erfindungsgemäßen Vorrichtung in einer vorgegebenen Reihenfolge an die gemeinsame Datenleitung angeschlossen und der Reihenfolge entsprechend nacheinander in Betrieb genommen werden. Mit diesem Verfahren ist der Austausch eines defekten Masters bei intakten Slaves oder der Austausch von maximal allen Slaves möglich.

Ein anderes Verfahren zum Betreiben der Vorrichtung ist abgestellt auf eine Reparatur, bei der ein Slave ausgetauscht wird. Anhand eines Vergleichs der im Master hinterlegten Kennungen mit den Kennungen der bisher vorhandenen Slaves kann der neue Slave ermittelt werden, wobei die alte Kennung im Master durch die neue Kennung des neuen Slaves ersetzt wird.

Weitere vorteilhafte Weiterbildungen und Ausgestaltungen der erfindungsgemäßen Vorrichtung ergeben sich jeweils aus weiteren abhängigen Ansprüchen und in Verbindung mit der folgenden Beschreibung.

### Zeichnung

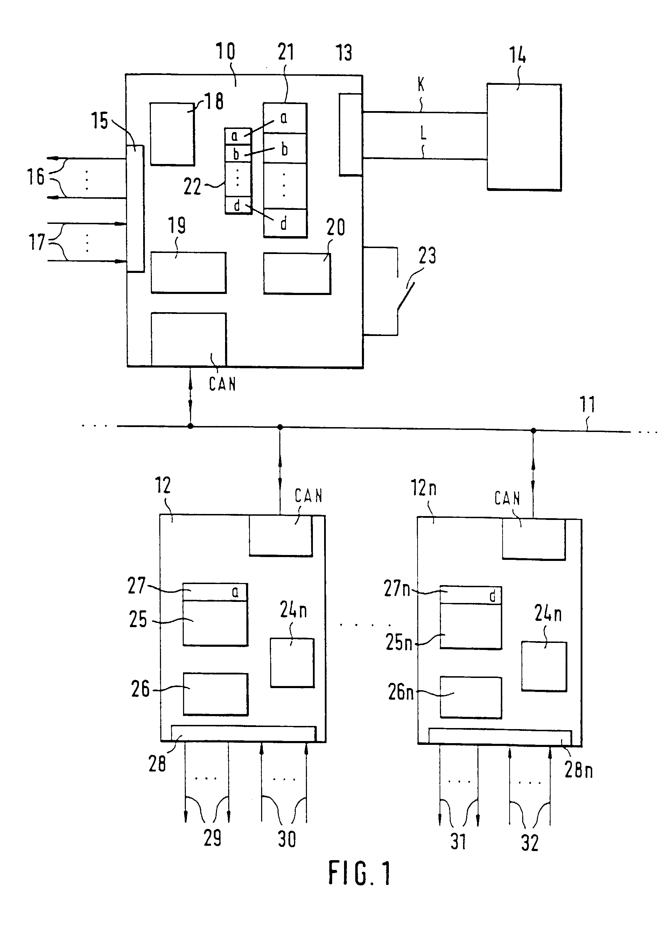

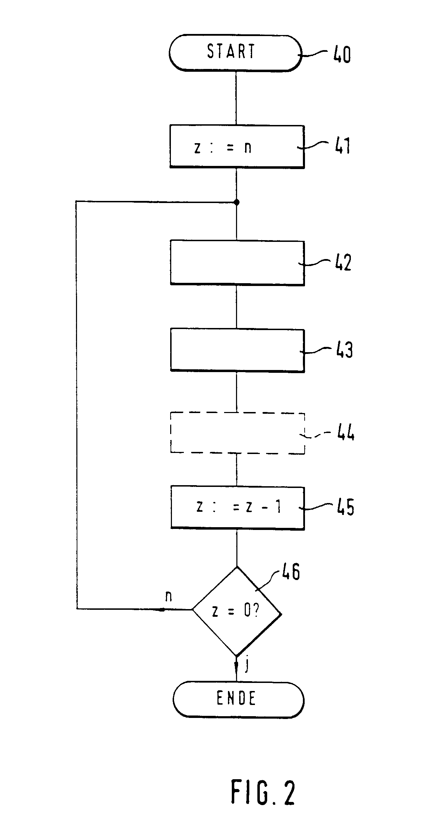

Figur 1 zeigt eine erfindungsgemäße Vorrichtung zum Austauschen von Daten zwischen einer Hauptstation (Master) und wenigstens einer Nebenstation (Slave) und die Figuren 2 bis 4 zeigen Flußdiagramme von Verfahren zum Betreiben der Vorrichtung.

Figur 1 zeigt eine Hauptstation 10, im folgenden als Master bezeichnet, die über eine Schnittstelle CAn mit einer Datenleitung 11 verbunden ist, an der wenigstens eine Nebenstation 12a, 12b, im folgenden als Slave bezeichnet, angeschlossen ist. Die Verbindung der Slaves 12a, 12b mit der Datenleitung 11 erfolgt über Schnittstellen CAN, die der im Master 10 vorhandenen Schnittstelle CAN entsprechen. Der Master 10 enthält zwei weitere Schnittestellen. Eine erste Schnittstelle ist eine Diagnoseschnittstelle 13, die über zwei Leitungen, die mit K und L bezeichnet sind, mit einem externen Rechner 14 verbindbar ist. Eine weitere, im Master 10 enthaltene Schnittstelle ist die Master-Anwendungsschnittstelle 15, die eine festlegbare Anzahl von Ausgängen 16 und Eingängen 17 aufweist.

Die Steuerung der Signalabläufe im Master 10 übernimmt ein Mikroprozessor 18, der mit einem Festwertspeicher 19, einem Diagnosespeicher 20, einem Speicher 21 für Slaveprogramme sowie einem Kennungsspeicher 22 zusammenwirkt. Sowohl der Speicher 21 für Slaveprogramme als auch der Kennungsspeicher 22 sind in eine gleiche Anzahl von Speicherplätzen eingeteilt, die miteinander korrespondieren. Die Korrespondenz ist mit Verbindungsstrichen angedeutet. Die Speicherplätze sind jeweils mit a, b ... d bezeichnet. Die Anzahl ist auf n festgelegt, die der maximalen Zahl von anschließbaren Slaves 12, 12n entspricht. Die im Master 10 zwischen den einzelnen Komponenten vorhandenen Verbindungsleitungen sind aus Übersichtlichkeitsgründen nicht eingezeichnet.

Dem Master 10 ist ein Schalter 23, beispielsweise ein bereits vorhandener Schalter in einem Armaturenbrett, zugeordnet, der zum Starten von Vorgängen vorgesehen ist, die innerhalb von erfindungsgemäßen Verfahren zum Betreiben der Vorrichtung ablaufen, die weiter unten näher erläutert werden. Die Slaves 12, 12n sind identisch aufgebaut. Die Anzahl der an die Datenleitung 11 anschließbaren Slaves 12, 12n ist auf die Anzahl n festgelegt. Die Slaves 12, 12n enthalten jeweils einen Mikroprozessor 24, 24n, der mit einem Festwertspeicher 25, 25n, einem Speicher 26, 26n und einem im Slave 12, 12n enthaltenen Kennungsspeicher 27, 27n zusammenwirkt. In den Kennungsspeichern 27, 27n ist jeweils eine individuelle Kennung für jeden Slave 12, 12n hinterlegt, die im gezeigten Ausführungsbeispiel als a, b ... d eingetragen ist. Die einzelnen Slaves 12, 12n unterscheiden sich nur durch diese Kennung a, b ... d. Neben der Schnittstelle CAN enthält jeder Slave 12, 12n eine Slave-Anwendungsschnittstelle 28, 28n, deren Funktion jedoch von Slave zu Slave 12, 12n unterschiedlich programmierbar ist. Die Slave-Anwendungsschnittstelle 28 im Slave 12 enthält eine vorgebbare Anzahl von Ausgängen 29 und eine vorgebbare Anzahl von Eingängen 30. Die Slave-Anwendungsschnittstelle 28n im Slave 12n enthält eine ebenfalls vorgebbare Anzahl von Ausgängen 31 und eine vorgebbare Anzahl von Eingängen 32.

Die erfindungsgemäße Vorrichtung arbeitet folgendermaßen:

Der Master 10 und der wenigstens eine Slave 12, 12n, die jeweils über gleiche Schnittstellen CAN und über die gemeinsame Datenleitung 11 Daten austauschen können, sind beispielsweise in einem Kraftfahrzeug im Rahmen eines Multiplexsystems angeordnet. Sowohl der Master 10 als auch die Slaves 12, 12n arbeiten mit Steuergeräten, Aktuatoren oder Sensoren zusammen. Bestimmte Aktuatoren und Sensoren können zu einer Funktionseinheit zusammengefaßt sein, der jeweils ein Slave 12, 12n zugeordnet ist. Eine solche Funktionseinheit ist beispielsweise ein Komfortantrieb in einer Kraftfahrzeugtür oder in einem Kraftfahrzeugsitz. Als Aktuatoren sind in derartigen Antrieben beispielsweise Elektromotoren, Ventile, Lampen usw. vorgesehen, während als Sensoren beispielsweise Drehzahl- oder Positionsfühler vorhanden sind. Aktuatoren können, gegebenenfalls unter Zwischenschaltung einer Endstufe, unmittelbar an die Ausgänge 16 des Masters 10, die Ausgänge 29 des Slaves 12 oder die Ausgänge 31 des Slaves 12n angeschlossen werden. Die Sensoren können unmittelbar an die Eingänge 17 des Masters 10, die Eingänge 30 des Slaves 12 oder die Eingänge 32 des Slaves 12n angeschlossen werden. In der bereits erwähnten anderen Ausgestaltung kann der Master 10 oder einer der Slaves 12, 12n mit einem Steuergerät zusammenwirken, wobei der erforderliche Datenaustausch ebenfalls über die Anwendungsschnittstellen 15, 28, 28n stattfindet. Die Bezeichnungen "Master" und "Slave" haben nicht die Bedeutung, daß nur der Master 10 eine Datenübertragung starten oder gezielt einen Slave 12, 12n aufrufen kann. Es ist vielmehr ein Multimasterbetrieb möglich, bei dem sämtliche, an der gemeinsamen Datenleitung 11 angeschlossenen Teilnehmer 10, 12, 12n eine an einen beliebigen anderen Teilnehmer 10, 12, 12n gerichtete Datenübertragung starten können. Kollisionen können mit einer Prioritätenliste abgefangen werden.

Ein wesentlicher Vorteil der erfindungsgemäßen Vorrichtung liegt darin, daß die Slaves 12, 12n zumindest in der Grundkonfiguration identisch aufgebaut sind. Mit dieser Maßnahme werden eine kostengünstige Serienproduktion und eine einfache Lagerhaltung begünstigt. Die einzelnen Slaves 12, 12n unterscheiden sich ausschließlich in der Kennung 27, 27n, die beispielsweise eine individuelle, einmalige, fortlaufende Seriennummer ist, die jeweils in den Kennungsspeicher 27, 27n der Slaves 12, 12n bei einer abschließenden Funktionsüberprüfung am Bandende einprogrammierbar ist. Der Kennungsspeicher 27, 27n ist als Teil des im Slave 12, 12n enthaltenen Festwertspeichers 25, 25n zu sehen, der ebenfalls Daten enthält, die in der Produktion hinterlegt werden, wobei die im Festwertspeicher 25, 25n enthaltenen Daten identisch sind bei jedem Slave 12, 12n. Die im Festwertspeicher 25, 25n hinterlegten Daten können unterschiedlichen Programmen zugeordnet sein. Ein Programm unterstützt beispielsweise die Arbeit der Schnittstelle CAN, während ein anderes Programm beispielsweise eine Diagnose der Ausgänge 29, 31 und der Eingänge 30, 32 durchführt. Die Diagnose erkennt beispielsweise Kurzschlüsse, Unterbrechnungen, Überlastungen und kann gegebenenfalls Plausibilitätsbetrachtungen durchführen, die zum Erkennen von Fehlern erforderlich sind, die keinem Totalausfall entsprechen. Die Diagnose ist insbesondere wertvoll zum Erkennen von sporadisch aufgetretenen Fehlern. Die von dem Diagnoseprogramm ermittelten Daten werden jeweils im Speicher 26, 26n hinterlegt. Der Speicher 26, 26n ist ein Speichertyp (EEPROM), der elektrisch beschreibbar und vorzugsweise auch löschbar ist.

Den in den Slaves 12, 12n enthaltenen Speichern 26, 26n kommt als wesentliche Aufgabe die Speicherung von anwendungsspezifischen Programmen zu. Ein anwendungsspezifisches Programm legt beispielsweise die Anzahl der Ausgänge 29, 31 und die Anzahl der Eingänge 30, 32 fest. Weiterhin kann beispielsweise festgelegt werden, ob die Ausgänge 29, 31 und die Eingänge 30, 32 digital oder analog arbeiten. Außerdem ist jeweils ein anwendungsspezifisches Programm zu speichern, das die mit dem jeweiligen Slave 12, 12n verbundene Funktionseinheit steuern kann und gegebenenfalls Rückmeldungen weiterverarbeiten kann.

Die in den Slaves 12, 12n zunächst nicht enthaltenen anwendungsspezifischen Programme, die jeweils im Speicher 26, 26n zu hinterlegen sind, werden bei der Inbetriebnahme des betreffenden Slaves 12, 12n vom Master 10 aus über die Datenleitung 11 in die Speicher 26, 26n der Slaves 12, 12n geladen. Zur Durchführung dieser Aufgabe ist es wesentlich, daß der Master 10, die Kennung a, b ... d der einzelnen, an der Datenleitung 11 angeschlossenen Slaves 12, 12n kennt, damit eine eindeutige Zuordnung der Programme für die Slaves 12, 12n möglich ist. Die Kennung a, b ... d der Slaves 12, 12n ist im Kennungsspeicher 22 des Masters 10 hinterlegt. Die einzelnen Kennungen a, b ... d können dem Master 10 entweder von den Slaves 12, 12n selbst oder von dem externen Rechner 14 mitgeteilt werden. Der externe Rechner 14 kommuniziert mit dem Master 10 über die an der Diagnoseschnittstelle 13 angeschlossenen Diagnoseleitungen K, L.

Die Bezeichnungen K, L stellen eine Verbindung zu der Norm DIN/ISO 9141 her, auf die hier ausdrücklich Bezug genommen wird. Obwohl DIN/ISO 9141 auf die Diagnose von in Kraftfahrzeug angeordneten elektronischen Systemen abgestellt ist, kann ohne weiteres eine weitergehende Datenübertragung, also beispielsweise auch die Hinterlegung der einzelnen Kennungen a, b ... d im Kennungsspeicher 22, vorgesehen sein. Gemäß DIN/ISO 9141 ist wenigstens eine Leitung K erforderlich. Der externe Rechner 14 enthält das in DIN/ISO 9141 angegebene Diagnose-Prüfgerät, das die Diagnose vornimmt. Die Diagnosedaten sind im Diagnosespeicher 20 hinterlegt, die entweder vom Master 10 selbst ermittelt, oder die von den einzelnen Slaves 12, 12n zum Master 10 übertragen wurden. Der Master 10 kann die von den einzelnen Slaves 12, 12n abgegebenen Diagnosedaten verarbeiten und beispielsweise durch Vergleich der Diagnosedaten, die von unterschiedlichen Slaves 12, 12n abgegeben wurden, Fehler detektieren, die in den einzelnen Slaves 12, 12n nicht erkannt worden sind. Die im Diagnosespeicher 20 hinterlegten Diagnosedaten können vom externen Rechner 14 gemäß DIN/ISO 9141 abgefragt und/oder gelöscht werden. Der Diagnosespeicher 20 im Master 10 entspricht vorzugsweise ebenfalls einem Speichertyp (EEPROM), der elektrisch beschreibbar und löschbar ist. Anstelle des externen Rechners 14 ist selbstverständlich jedes andere geeignete Diagnosegerät verwendbar.

Der Diagnosespeicher 20 im Master 10 kann gegebenenfalls einen Speicherbereich aufweisen, der anwendungsspezifische Programme aufnimmt, die der Master 10 benötigt, sofern die Master-Anwendungsschnittstelle 15 vorhanden ist. Die Master-Anwendungsschnittstelle 15 ermöglicht es, daß der Master 10 zusätzlich zu seinen weiteren Aufgaben eine Funktion übernimmt, die auch von den Slaves 12, 12n wahrgenommen wird. Die im Diagnosespeicher 20 gegebenenfalls hinterlegte anwendungsspezifischen Programme legen daher sowohl die Anzahl der Ausgänge 16 und der Eingänge 17 als auch deren Funktion, beispielsweise digital oder analog, fest.

Die für die einzelnen Slaves 12, 12n bestimmten, in den Speichern 26, 26n der Slaves 12, 12n zu hinterlegenden Programme können gemäß einer Ausgestaltung vom externen Rechner 14 in den Master 10 übermittelt und vom Master 10 weitergeleitet werden. Gemäß einer besonders vorteilhaften Weiterbildung der erfindungsgemäßen Vorrichtung ist vorgesehen, daß im Master 10 der Speicher 21 für Slaveprogramme vorgesehen ist, in dem die in den einzelnen Slaves 12, 12a zu hinterlegenden Programme ebenfalls hinterlegt sind. Mit dieser Maßnahme ist es möglich, bei einem Ausfall der erfindungsgemäßen Vorrichtung, beispielsweise bei einem Defekt eines oder mehrerer Slaves 12, 12n oder eines Ausfalls des Masters 10 auch ohne externen Rechner 14 eine Reparatur vornehmen zu können. Ohne den externen Rechner 14 kann mit dem Schalter 23 eine Initialisierung gestartet werden.

Die einzelnen Verfahren zum Betreiben der erfindungsgemäßen Vorrichtung werden anhand der in den Figuren 2 bis 4 gezeigten Flußdiagrammen näher erläutert:

In Figur 2 ist ein Flußdiagramm gezeigt, das einem Verfahren entspricht, bei dem eine Inbetriebnahme der erfindungsgemäßen Vorrichtung vorgesehen ist, wobei die im Master 10 zu hinterlegenden Kennungen a, b ... d der Slaves 12, 12n sowie die in den Slaves 12, 12n jeweils zu hinterlegenden anwendungsspezifischen Programme im Speicher 26, 26n vom externen Rechner 14 bereitgestellt werden. Die Kennungen a, b ... d der einzelnen Slaves 12, 12n sind dem externen Rechner 14 bekannt. Diese Information kann beispielsweise manuell eingegeben werden durch Ablesen der Kennungen a, b ... d, die beispielsweise entweder unmittelbar auf den einzelnen Slaves 12, 12n oder auf einer Verpackung der Slaves 12, 12n aufgedruckt ist.

Nach einem vom externen Rechner 14 ausgelösten Start 40 wird in einer Zuweisung 41 eine Zählvariable z gleich der Anzahl n der Slaves 12, 12n gesetzt. In einem nachfolgenden Speicherschritt 42 wird im Kennungsspeicher 22 die Kennung a des ersten Slaves 12 im Master 10 hinterlegt. In einem nächsten Speicherschritt 43 wird das vom externen Rechner 14 bereitgestellte Programm über den Master 10, die Schnittstellen CAN und die gemeinsame Datenleitung 11 in den Speicher 26, 26n desjenigen Slaves 12, 12n geladen, dessen Adresse oder ein Teil davon der Kennung a, b ... d entspricht. Voraussetzung ist, daß die Zuordnung der einzelnen anwendungsspezifischen Programme zu den Kennungen a, b ... d dem externen Rechner 14 bekannt sind. Da die einzelnen anwendungsspezifischen Programme gegeben sind, ist lediglich darauf zu achten, daß der betreffende Slave 12, 12n an den vorgegebenen Ort gebracht ist, bei dem das betreffende anwendungsspezifische Programm ablaufen soll. In einem nächsten Speicherschritt 44 ist vorgesehen, daß das im jeweiligen Slave 12, 12n hinterlegte anwendungsspezifische Programm auch in den Speicher 21 für Slaveprogramme eingespeichert wird, sofern der Speicher 21 im Master 10 vorgesehen ist. Deshalb ist der Speicherschritt 44 strichliniert in Figur 2 eingetragen. In einer nachfolgenden Zuweisung 45 wird der Wert der Zählvariablen z um Eins reduziert. Die nachfolgende Abfrage 46 stellt fest, ob sämtliche Slaves 12, 12n berücksichtigt wurden. Falls dies nicht der Fall ist, wird zum Speicherschritt 42 zurückgegangen. Falls dies der Fall ist, ist die Initialisierung zu Ende. Nach dem Ende der Initialisierung beginnt der normale Betrieb.

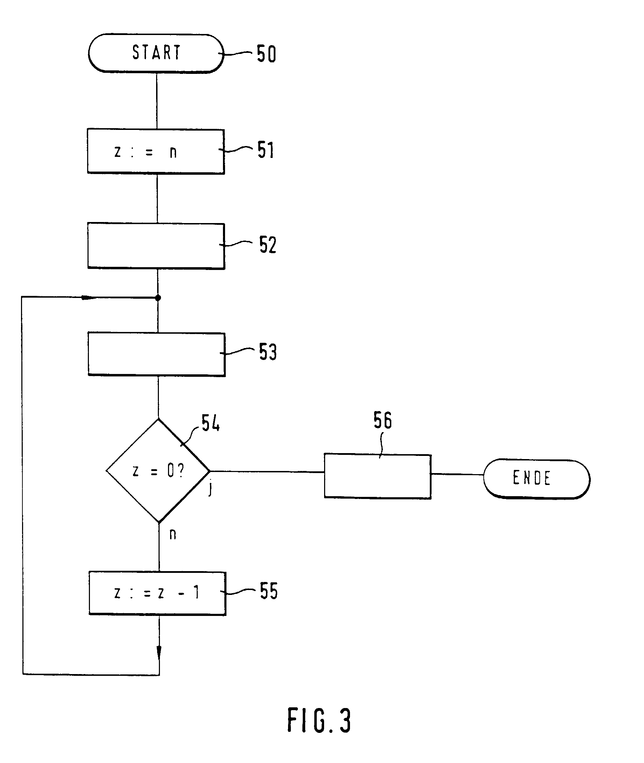

Bei einem Ausfall eines Slaves 12, 12n wird der betroffene Slave 12, 12n ausgetauscht. Sofern der externe Rechner 14 zur Verfügung steht, so muß dem Master 10 lediglich die neue Kennung a, b ... d des neuen Slaves 12, 12n mitgeteilt und eine Hinterlegung der anwendungsspezifischen Programme im betreffenden Speicher 26, 26n veranlaßt werden. Falls der externe Rechner 14 nicht zur Verfügung steht, kann bei einem Ausfall eines Slaves 12, 12n das in Figur 3 gezeigte erfindungsgemäße Verfahren vorgesehen sein, das voraussetzt, daß der Speicher 21 für Slaveprogramme im Master 10 vorhanden ist, und daß die einzelnen Slaves 12, 12n ihre Kennung a, b ... d zum Master 10 hin übertragen können, wobei die einzelnen Kennungen a, b ... d der Slaves 12, 12n im Master 10 bekannt sein müssen. Es muß somit eine allgemeine Adressierung der Slaves 12, 12n möglich sein, bei der sich alle Slaves 12, 12n angesprochen fühlen, ohne daß die Kennung a, b ... d als Teil der Adresse mitgeschickt wird.

Nach einem Start 50, der beispielsweise mit dem Schalter 23 auslösbar ist, wird in einer Zuweisung 51 der Zählvariablen z ein Wert zugewiesen, der der Anzahl n der Slaves 12, 12n entspricht. In einer anschließenden allgemeinen Sendeaufforderung 52 bewirkt der Master 10 eine Antwort von jedem Slave 12, 12n. In einem Einlesevorgang 53 wird die betreffende Kennung a, b ... d eines Slaves 12, 12n, der gerade geantwortet hat, in den Master 10 eingelesen und gegebenenfalls sofort mit den im Kennungsspeicher 22 des Masters 10 hinterlegten Kennungen a, b ... d der Slaves 12, 12n verglichen. In der nachfolgenden Abfrage 54 wird festgestellt, ob bereits alle Slaves 12, 12n geantwortet haben. Falls dies nicht der Fall ist, wird in einer Zuweisung 55 die Zählvariable um Eins vermindert und zum Einlesevorgang 53 zurückgegangen. Die funktionsfähigen Slaves 12, 12n sind konfiguriert und antworten mit einer speziellen Nachricht, die vorzugsweise unmittelbar die Kennung a, b ... d des betreffenden Slaves 12, 12n enthält. Eine Nachrichtenprioritätenliste für den Zugriff auf den Bus, die in den Slaves 12, 12n hinterlegt ist, verhindert eine Datenkollision auf der Datenleitung 11. Lediglich der eine Slave 12, 12n, der ausgetauscht wurde, antwortet mit einer allgemeinen Nachricht, die der Master 10 entsprechend interpretieren kann. Der ausgetauschte Slave 12, 12n ist somit identifiziert. Wird in der Abfrage 54 festgestellt, daß alle Slaves 12, 12n berücksichtigt wurden, erfolgt in der Zuweisung 56 eine Initialisierung des neuen Slaves 12, 12n durch Übertragung des für den betreffenden Slave 12, 12n vorgesehenen anwendungsspezifischen Programms, das an der entsprechenden Stelle im Speicher 21 für Slaveprogramme im Master 10 hinterlegt ist. Gleichzeitig wird im Master 10 die eingelesene Kennung a, b ... d des neuen Slaves 12, 12n an der entsprechenden Stelle in den Kennungsspeicher 22 übernommen und die bisherige Kennung a, b ... d des bereits ausgetauschten defekten Slaves 12, 12n zuvor gelöscht.

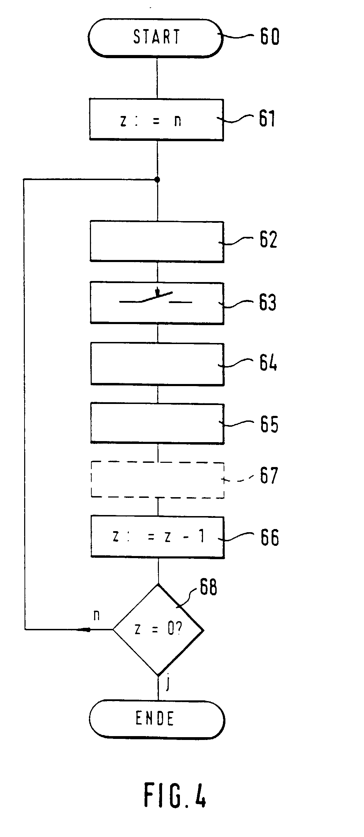

Ein weiteres Verfahren betrifft das Vorgehen bei einem Ausfall des Masters 10. Unter der Voraussetzung, daß sämtliche Slaves 12, 12n in Ordnung sind und deshalb das ihnen jeweils zugeordnete anwendungsspezifische Programm kennen, ist der Speicher 21 für Slaveprogramme im Master 10 nicht erforderlich. Falls dieser Speicher 21 für Slaveprogramme vorhanden ist und die entsprechenden, für die einzelnen Slaves 12, 12n vorgesehenen anwendungsspezifischen Programme enthält, kann neben dem Master 10 zusätzlich eine beliebige Anzahl von defekten Slaves 12, 12n ausgetauscht werden. Das Verfahren wird anhand des in Figur 4 gezeigten Flußdiagramms näher erläutert. Nach einem Start 60, der beispielsweise durch Einschalten der Energieversorgung des ausgetauschten Masters 10 oder beispielsweise nach einem bereits veranlaßten Testlauf auftritt, wird zunächst in einer Zuweisung 61 einer Zählvariablen z der Wert n zugewiesen, der der Anzahl der Slaves 12, 12n entspricht, die dem Master 10 bekannt sein muß. Die Anzahl n entspricht den Speicherplätzen für die einzelnen Kennungen a, b ... d im Kennungsspeicher 22. Für das folgende Verfahren ist vorauszusetzen, daß die Slaves 12, 12n in einer vorgegebenen Reihenfolge nacheinander an die gemeinsame Datenleitung 11 angeschlossen werden. Sofern mehrere defekte Slaves 12, 12n auszutauschen sind, so ist auch in diesem Fall eine vorgegebene Reihenfolge des Anschließens einzuhalten. Die Reihenfolge entspricht zweckmäßigerweise der Numierung der Slaves 12, 12n, die dem aktuellen Stand der Zählvariablen z entspricht. Im nächsten Schritt 62 ist ein Slave 12, 12n an die gemeinsame Datenleitung 11 enzuschließen, wobei die Reihenfolge zu beachten ist. Nach dem Anschließen des betreffenden Slaves 12, 12n muß dem Master 10 mitgeteilt werden, daß der Anschlußvorgang beendet ist. In dem Programmschritt 63 erfolgt diese Mitteilung beispielsweise durch ein Betätigen des Schalters 23. Die Schalterbetätigung veranlaßt den Master 10 zum Aussenden einer allgemeinen Anfrage 64, die den neu angeschlossenen Slave 12, 12n zum Ausgeben seiner im Kennungsspeicher 27, 27n hinterlegten Kennung a, b ... d veranlaßt. Der weitere Verfahrensverlauf hängt davon ab, ob der Speicher 21 für Slaveprogramme im Master 10 vorhanden ist und ob dort die anwendungsspezifischen Programme für die einzelnen Slaves 12, 12n hinterlegt sind. Falls dieser Speicher für Slaveprogramme 21 nicht vorhanden ist, können defekte Slaves 12, 12n nicht ausgetauscht werden. Der Verfahrensverlauf geht unmittelbar zur Zuweisung 66, die eine Reduzierung der Zählvariablen z um Eins vornimmt.

Ist dagegen der Speicher 21 für Slaveprogramme im Master 10 vorhanden, so gibt es nach der Ausgabe 65 der Kennung a, b ... d im nachfolgenden Schritt 67 zwei Möglichkeiten. Ist der Speicher 21 für Slaveprogramme vorhanden, enthält aber keine anwendungsspezifischen Programme, dann muß das anwendungsspezifische Programm in jedem Slave 12, 12n vorhanden sein. Im Schritt 67 wird eine Übertragung des im anwendungsspezifischen Speicher 26, 26n enthaltenen anwendungsspezifischen Programms in den Master 10 vorgenommen und dort an einem Speicherplatz des Speichers 21 für Slaveprogramme abgelegt, das der laufenden Zählvariablen z entspricht und dem die jeweilige Kennung a, b ... d zugeordnet ist. Mit dieser Maßnahme wird es möglich, einen zu einem späteren Zeitpunkt stattfindenden Ausfall eines Slaves 12, 12n durch einfachen Austausch des betroffenen Slaves 12, 12n zu beherrschen, wobei die in dem betroffenen Slave 12, 12n zu hinterlegende anwendungsspezifischen Programme vom Master 10 abgerufen werden können. Sofern der Speicher für Slaveprogramme 21 im Master 10 vorhanden ist und die jeweiligen anwendungsspezifischen Programme enthält, so kann in dem Schritt 67 dem zuletzt an die gemeinsame Datenleitung 11 angeschlossenen Slaves 12, 12n das entsprechende anwendungsspezifische Programm zur Verfügung gestellt werden. Mit dieser Maßnahme ist ein Austausch des betreffenden Slaves 12, 12n möglich. Nach der Zuweisung 66 wird in der Abfrage 68 geprüft, ob sämtliche Slaves 12, 12n berücksichtigt wurden. Falls dies nicht der Fall ist, wird der nächste Slave 12, 12n an die gemeinsame Datenleitung 11 im Schritt 62 angeschlossen und mit dem Schritt 63 die allgemeine Anfrage 64 gestartet. Wird dagegen in der Abfrage 68 festgestellt, daß sämtliche Slaves 12, 12n berücksichtigt wurden, so ist die Initialisierung beendet.

## Patentansprüche

1. Vorrichtung zum Austauschen von Daten zwischen einer Hauptstation (Master) und wenigstens einer Nebenstation (Slave), die jeweils über Schnittstellen auf wenigstens eine gemeinsame Datenleitung zugreifen, dadurch gekennzeichnet, daß der Master (10) einen Kennungsspeicher (22) zur Aufnahme von Kennungen (a, b ... d) der Slaves (12, 12n) enthält, daß die Slaves (12, 12n) jeweils einen Kennungsspeicher (27, 27n) enthalten, in dem eine individuelle, im Kennungsspeicher (22) des Masters (10) zu hinterlegende Kennung (a, b ... d) gespeichert ist, und daß die Slaves (12, 12n) jeweils einen Speicher (26, 26n) zur Aufnahme von für den Slave (12, 12n) bestimmten anwendungspezifischen Programmen enthalten.

2. Vorrichtung nach Anspruch 1, dadurch gekennzeichnet, daß im Master (10) ein Speicher (21) zur Aufnahme der in den Slaves (12, 12n) zu hinterlegenden anwendungsspezifischen Programme vorgesehen ist.

3. Vorrichtung nach Anspruch 1, dadurch gekennzeichnet, daß die Funktion einer in dem Slave (12, 12n) enthaltenen Slave-Anwendungsschnittstelle (28, 28n) von einem im Speicher (26, 26n) hinterlegten anwendungsspezifischen Programm festgelegt ist.

4. Vorrichtung nach Anspruch 1, dadurch gekennzeichnet, daß die in den Slaves (12, 12n) hinterlegte individuelle Kennung (a, b ... d) eine in der Fertigung der Slaves (12, 12n) vergebene laufende Nummer (Seriennummer) ist.

5. Vorrichtung nach Anspruch 1, dadurch gekennzeichnet, daß im Master (10) ein Diagnosespeicher (20) zum Hinterlegen von Diagnosedaten der Slaves (12, 12n) und/oder Diagnosedaten des Masters (10) vorgesehen ist, der über eine im Master (10) angeordnete Diagnoseschnittstelle (13) von einem externen Rechner (14) auslesbar und löschbar ist.

6. Vorrichtung nach Anspruch 1 oder 2, dadurch gekennzeichnet, daß die in den Slaves (12, 12n) jeweils im Speicher (26, 26n) zu hinterlegenden anwendungsspezifischen Programme von einem externen Rechner (14) bereitgestellt sind, der mit dem Master (10) über eine im Master (10) enthaltenen Diagnoseschnittstelle (13) verbindbar ist.

7. Vorrichtung nach Anspruch 6, dadurch gekennzeichnet, daß der externe Rechner (14) die im Master (10) zu hinterlegenden Kennungen (a, b ... d) der Slaves (12, 12n) in den im Master (10) enthaltenen Kennungsspeicher (22) lädt und daß der externe Rechner (14) die in den Slaves (12, 12n) jeweils in den Speicher (26, 26n) zu hinterlegenden anwendungsspezifischen Programme über den Master (10) in die Slaves (12, 12n) lädt.

8. Vorrichtung nach Anspruch 1, dadurch gekennzeichnet, daß die Slaves (12, 12n) die in den Kennungsspeicher (22) des Masters (10) zu hinterlegenden Kennungen (a, b ... d) der Slaves (12, 12n) abfragen, wobei die Slaves (12, 12n) in einer vorgegebenen Reihenfolge nacheinander an die gemeinsame Datenleitung (11) anzuschließen sind.

9. Vorrichtung nach Anspruch 2, dadurch gekennzeichnet, daß ein Austauschen der im Kennungsspeicher (22) des Masters (10) hinterlegten alten Kennung (a, b ... d) gegen die neue Kennung (a, b ... d) des neuen Slaves (12, 12n) vorgesehen ist und daß eine Übertragung der im Speicher (21) für Slaveprogramme des Masters (10) enthaltenen anwendungsspezifischen Programme in den neuen Slave (12, 12n) und eine Hinterlegung im Speicher (26, 26n) des neuen Slaves (12, 12n) vorgesehen sind.

10. Vorrichtung nach einem der vorhergehenden Ansprüche, gekennzeichnet durch die Verwendung bei einem, vorzugsweise in einem Kraftfahrzeug angeordneten Multiplexsystem, bei dem ein Datenaustausch zwischen dem Master (10) und den Slaves (12, 12n) oder zwischen den Slaves (12, 12n) über die gemeinsame Datenleitung (11) zeitmultiplex erfolgt.

## Claims

1. Apparatus for interchanging data between a main station (master) and at least one secondary station (slave) which in each case act on at least one common data line via interfaces, characterized in that the master (10) contains an identification memory (22) for holding identifications (a, b ... d) of the slaves (12, 12n), and in that the slaves (12, 12n) each contain an identification memory (27, 27n) in which an individual identification (a, b ... d) which is to be stored in the identification memory (22) of the master (10) is stored, and in that the slaves (12, 12n) each contain a memory (26, 26n) for holding application-specific programs intended to the slave (12, 12n).

2. Apparatus according to Claim 1, characterized in that the master (10) contains a memory (21) for holding application-specific programs which are to be stored in the slaves (12, 12n).

3. Apparatus according to Claim 1, characterized in that the function of a slave application interface (28, 28n) which is contained in the slave (12, 12n) is defined by an application-specific program which is stored in the memory (26, 26n).

4. Apparatus according to Claim 1, characterized in that the individual identification (a, b ... d) which is stored in the slaves (12, 12n) is a sequential number (serial number) allocated in the production of the slaves (12, 12n).

5. Apparatus according to Claim 1, characterized in that the master (10) contains a diagnostic memory (20) for storing diagnostic data relating to the slaves (12, 12n), and/or diagnostic data relating to the master (10), which diagnostic memory (20) can be read and deleted by an external computer (14) via a diagnostic interface (13) which is arranged in the master (10).

6. Apparatus according to Claim 1 or 2, characterized in that the application-specific programs which are respectively to be stored in the memory (26, 26n) in the slaves (12, 12n) are provided by an external computer (14) which can be connected to the master (10) via a diagnostic interface (13) contained in the master (10).

7. Apparatus according to Claim 6, characterized in that the external computer (14) loads the identifications (a, b... d) of the salves (12, 12n) to be stored in the master (10) into the identification memory (22) which is contained in the master (10), and in that the external computer (14) loads the application-specific programs, which are to be stored respectively in the memories (26, 26n) in the slaves (12, 12n), into the slaves (12, 12n) via the master (10).

8. Apparatus according to Claim 1, characterized in that the slaves (12, 12n) interrogate the identifications (a, b... d) of the slaves (12, 12n) which are to be stored in the identification memory (22) of the master (10), in which case the slaves (12, 12n) can be connected successively to the common data line (11) in a predetermined sequence.

9. Apparatus according to Claim 2, characterized in that an exchange of the old identification (a, b ... d) which is stored in the identification memory (22) of the master (10) for the new identification (a, b ... d) of the new slave (12, 12n) is envisaged, and in that a transfer of the application-specific programs which are contained in the memory (21) for slave programs of the master (10) to the new slave (12, 12n) and storage in the memory (26, 26n) of the new slave (12, 12n) are envisaged.

10. Apparatus according to one of the preceding claims, characterized by use in a multiplex system which is preferably arranged in a motor vehicle and in which a data interchange between the master (10) and the slaves (12, 12n) or between the slaves (12, 12n) takes place via the common data line (11) using the type-division multiplex process.

## Revendications

1. Dispositif pour l'échange de données entre un poste principal (maître) et au moins un poste auxiliaire (esclave), accédant chaque fois à au moins une ligne commune de données par des interfaces,
caractérisé en ce que
le maître (10) comporte une mémoire d'identité (22) pour recevoir les identités (a, b...d) des esclaves (12, 12n),
- les esclaves (12, 12n) comportent chacun une mémoire de caractéristiques (27, 27n) contenant une identité (a, b...d), individuelle, enregistrée dans la mémoire d'identité (22) du maître (10) et,
- les esclaves (12, 12n) comportent chaque fois une mémoire (26, 26n) pour recevoir les programmes d'application définis pour les esclaves (12, 12n).

2. Dispositif selon la revendication 1,
caractérisé en ce que
le maître (10) comporte une mémoire (21) pour recevoir les programmes d'application enregistrés dans les esclaves (12, 12n).

3. Dispositif selon la revendication 1,
caractérisé en ce que
la fonction d'une interface d'esclaves (28, 28n) de l'esclave (12, 12n) est fixée par un programme d'application contenu dans la mémoire (26, 26n).

4. Dispositif selon la revendication 1,
caractérisé en ce que
l'identité (a, b...d) individuelle enregistrée dans les esclaves (12, 12n) est un numéro courant (numéro de série) attribué lors de la fabrication des esclaves (12, 12n).

5. Dispositif selon la revendication 1,
caractérisé en ce que
le maître (10) comporte une mémoire de diagnostic (20) pour recevoir des données de diagnostic des esclaves (12, 12n) et/ou les données de diagnostic du maître (10), qui peut être lue et effacée par un calculateur externe (14) par une interface de diagnostic (13) associée au maître (10).

6. Dispositif selon la revendication 1 ou 2
caractérisé en ce que
les programmes d'application des esclaves (12, 12n) dans la mémoire (26, 26n) sont fournis par un calculateur externe (14) qui peut être relié au maître (10) par une interface de diagnostic (13) comprenant le maître (10).

7. Dispositif selon la revendication 6,
caractérisé en ce que
le calculateur externe (14) charge les identités (a, b...d) des esclaves (12, 12n) à enregistrer dans le maître (10), dans la mémoire d'identité (22) comprenant le maître (10) et en ce que le calculateur externe (14) charge les programmes d'application spécifiques à enregistrer dans les esclaves (12, 12n) chaque fois dans la mémoire (26, 26n) par le maître (10) dans les esclaves (12, 12n).

8. Dispositif selon la revendication 1,
caractérisé en ce que
les esclaves (12, 12n) qui interrogent les identités (a, b...d) des esclaves (12, 12n) à enregistrer dans la mémoire d'identité (22) du maître (10), les esclaves (12, 12n) étant raccordés selon un ordre prédéterminé à la ligne commune de données (11).

9. Dispositif selon la revendication 2,
caractérisé par
un échange de l'ancienne identité (a, b...d) enregistrée dans la mémoire d'identité (22) du maître (10) contre la nouvelle identité (a, b...d) du nouvel esclave (12, 12n) et par un transfert des programmes d'application contenus dans la mémoire (21) spécifiques aux programmes esclaves du maître (10) dans le nouvel esclave (12, 12n) et un enregistrement dans la mémoire (26, 26n) du nouvel esclave (12, 12n).

10. Dispositif selon l'une quelconque des revendications précédentes,
caractérisé par
l'application d'un système multiplex équipant de préférence un véhicule automobile, selon lequel l'échange des données entre le maître (10) et les esclaves (12, 12n) ou entre les esclaves (12, 12n) se fait par une ligne de données (11), commune en multiplexage dans le temps.
